# EUROPEAN PATENT APPLICATION

(11) **EP 1 942 162 A1**
(43) Date of publication of application: **09.07.2008**
(21) Application number: 07255053.6
(22) Date of filing: 27.12.2007
(51) Int. Cl.: C09D 201/00

(54) **Anti-UV coating composition and the use thereof**

(30) Priority: 29.12.2006 TW 95150106
(71) Applicant: Eternal Chemical Co., Ltd., Kaohsiung (TW)
(72) Inventor: Hsu, Lung-Lin, Kaohsiung (TW); Chou, Chung-Hung, Kaohsiung (TW); Wang, Yi-Chia, Kaohsiung (TW)
(74) Representative: Srinivasan, Ravi Chandran

(57) **Abstract**

The invention provides an anti-UV coating composition comprising inorganic particulates, a resin, and at least one kind of organic particles having a different refractive index from that of the resin. The coating composition of the present invention can be coated onto a substrate and provides good anti-UV effect. The invention also provides a film comprising a substrate wherein at least one surface of said substrate has at least one coating layer formed from the anti-UV coating composition of the present invention. The film of the subject invention can enhance brightness, has good weather resistance, can absorb UV light, and can effectively solve the yellowing problem of the substrate.

## Description

### BACKGROUND OF THE INVENTION

### Field of the Invention

The present invention relates to an anti-UV coating composition, which can be coated onto a substrate to provide an anti-UV effect to the surface of the substrate. The present invention also relates to a film having an anti-UV layer formed from the anti-UV coating composition.

### Description of the Prior Art

A backlight module is one of key components in a LCD panel. Since the liquid crystals do not emit themselves, the backlight module mainly serves to provide a uniform and highly illuminant light source for liquid crystal panels. The fundamental principle involves transforming a typical point or line light source into a surface light source product having a high luminance and uniform brightness through a simple and effective mechanism, thereby providing the product with the required back light source to display an image. Currently, the backlight module has a considerable impact on the production cost and the quality of LCDs.

The popular backlight modules available in current market are primarily classified into side-type backlight modules and direct-type backlight modules in view of the location of the lamp. In common side-type backlight modules, a reflective film is disposed at the bottom of a light guide plate to reflect the light from the bottom side back to the light guide plate and prevent the light source from leaking, so as to increase the service efficiency of the light. While in the direct-type backlight modules, the reflective film is disposed on or adhered to the bottom surface of a light box so as to reflect the light beams directly from the lamp and the light beams reflected by a diffusion plate from the bottom of the light box back to the diffusion plate for reuse. In summary, all the reflective films have the function of increasing the service efficiency of light sources. However, the light emitted from common lamps contains ultraviolet (UV) light that is prone to render the polymeric resin in the optical film yellowing, thereby causing a decrease in light reflectivity and the problem associated with the chromatic aberration of light reflection.

By extensive studies, the inventors of the present invention found a novel anti-UV coating composition, which can be coated onto a substrate to provide the substrate with a good anti-UV effect. Since the anti-UV coating composition can absorb UV light, the optical film formed by coating the anti-UV coating composition onto the surface of an optical substrate can be protected from being damaged by UV light. In addition, after passing through or being reflected by the optical film, most of the UV light is absorbed, so that the optical properties of other optical films would not be affected by the UV light. Therefore, the above disadvantages can be overcome effectively.

### SUMMARY OF THE INVENTION

The present invention is directed to an anti-UV coating composition comprising inorganic particulates, a resin, and at least one kind of organic particles having a different refractive index from that of the resin, wherein the organic particles have a particle size in a range of from 0.1 µm to 10 µm.

The present invention is also directed to a film, comprising a substrate and at least one anti-UV layer formed from the anti-UV coating composition of the present invention on at least one surface of the substrate.

### BRIEF DESCRIPTION OF THE DRAWINGS

FIG. 1 shows a reflective substrate having a coating layer formed from a conventional anti-UV coating composition.

FIG 2 shows a reflective substrate having a coating layer formed from an anti-UV coating composition according to the present invention.

FIGs. 3-6 are schematic diagrams showing the reflective substrates suitable for the present invention.

FIG. 7 is a schematic diagram showing a light source device for an advertising light box.

FIG. 8 is a schematic diagram showing a direct-type backlight module device.

FIG. 9 is a schematic diagram showing a side-type backlight module device.

FIGs. 10-23 show the reflection spectrograms at each testing point of time of the films of Examples 1-8 and Comparative Examples 1-6 as tested with a QUV weathering tester at 60°C with the power of a UVB 313 nm lamp set at 0.8 W/m²/nm.

### DETAILED DESCRIPTION OF THE INVENTION

The resins suitable for the anti-UV coating composition of the present invention are not particularly limited, which include, for example, but are not limited to, (meth)acrylic resins, polyamide resins, epoxy resins, fluoro resins, polyimide resins, polyurethane resins, alkyd resins, polyester resins, or mixtures thereof; among which the methacrylic resins, fluoro resins, and mixtures thereof are preferred and the methacrylic resins are more preferred. The methacrylic resins are derived from one or more acrylic monomers as polymerization units, wherein the acrylic monomers have a general formula as follows: 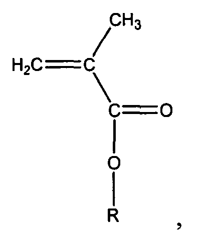 where R is hydrogen, or a substituted or unsubstituted C₁-C₁₈ aliphatic group. The substituted or unsubstituted aliphatic group can be a substituted or unsubstituted alkyl, such as, a C₁-C₁₀ alkyl or a hydroxyl-substituted C₁-C₁₀ alkyl (CₙH₂ₙOH, n=1 to 10). Preferably, R is hydrogen, a C₁-C₈ alkyl, or a hydroxyl-substituted C₂-C₈ alkyl.

The anti-UV coating composition of the present invention contains inorganic particulates to absorb UV light. The inorganic particulates are not particularly limited, and may include, for example, but are not limited to, zinc oxide, silica, titanium dioxide, zirconia, alumina, barium sulfate, or calcium carbonate particulates, or mixtures thereof; among which zinc oxide and titanium dioxide and mixtures thereof are preferred, and titanium dioxide is more preferred. The inorganic particulates typically have a particle size in a range of from 1 to 1000 nm, preferably from 10 to 100 nm.

The amount of the inorganic particulates in the anti-UV coating composition of the present invention is not particularly limited, and can be any suitable one. Preferably, the amount of the inorganic particulates based on the weight of the resin used is from 0. 1 to 100 weight percent, preferably from 1 to 30 weight percent. Moreover, if the dispersion of the inorganic particulates in the coating composition is poor, coagulation or sedimentation will occur, and the coating on the resultant film will be non-uniform and have a poor anti-UV performance. Therefore, a modification treatment with a hydroxide compound can be performed on the surface of the inorganic particulates, so as to increase the dispersibility.

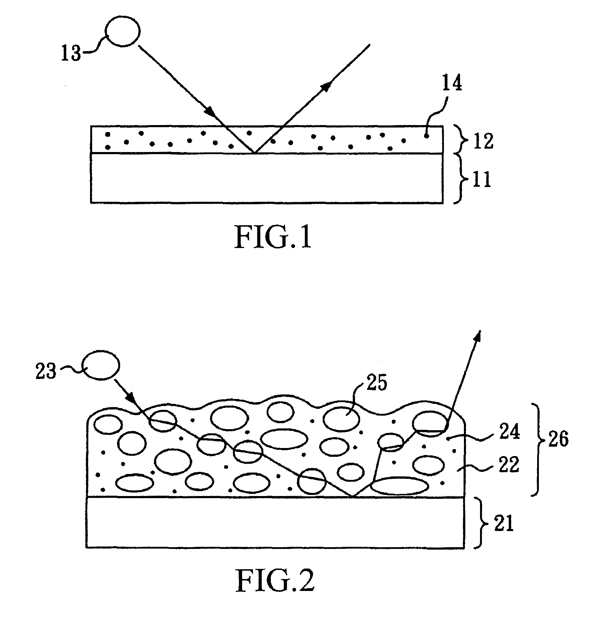

Conventional anti-UV coating compositions utilize inorganic particulates to absorb UV light. FIG. 1 shows a reflective substrate (11) having a coating (12) formed from a conventional anti-UV coating composition. As showed in FIG. 1, the light emitted from a source (13) is projected on the substrate through the coating, and then reflects from the substrate through the coating. When passing through the coating, the light contacts the inorganic particulates (14) contained in the coating, and the UV light is absorbed. However, when passing through a coating formed from a conventional coating composition, the light cannot effectively contact the inorganic particulates to allow the UV light to be absorbed completely, due to its short, straight progress path, and the anti-UV effect is poor.

The anti-UV coating composition of the present invention includes at least one kind of organic particles having a refractive index different from that of the resin to solve the above problems. FIG. 2 shows a reflective substrate (21) having a coating (26) formed from an anti-UV coating composition of the present invention. As shown in FIG. 2, since the organic particles (25) have a refractive index different from that of the resin (22), when the light from the light source (23) enters the coating (26) formed from the anti-UV coating composition of the present invention, it is reflected many times by the organic particles and resin, and the light traveling path is increased, so that it is easier for the light to contact the inorganic particulate (24), thereby improving the UV-absorbing effect.

The anti-UV coating composition of the present invention includes at least one kind of organic particles having a refractive index different from that of the resin. The species of the organic particles are not particularly limited, and may include, for example, but are not limited to, methacrylate resin particles or silicone resin particles or mixtures thereof, and preferably silicone resin particles. In addition, if the organic particles have a too large particle size, the light will directly pass through the particles, thus resulting in a poor UV-absorbing effect. Therefore, the organic particles typically have a particle size in a range of from 0. µm to 10 µm, preferably from 1µm to 5 µm, and more preferably from 1.8 µm to 2.4 µm.

The refractive index of the resin contained in the anti-UV coating composition of the present invention is at least 1.47, which can be increased by adding inorganic particulates to the resin and be increased up to 2.0. The refractive index of the organic particles contained in the anti-UV coating composition of the present invention is of from 1.40 to 1.60. According to the present invention, an absolute value of the difference between the refractive indexes of the organic particles and the resin is at least about 0.07 and at most about 0.6.

The amount of the organic particles, based on the amount of the resin, in the anti-UV coating composition of the present invention is in a range of from 1 to 500 weight percent, preferably from 10 to 300 weight percent, and more preferably from 30 to 200 weight percent. If the amount of the organic particles, based on the amount of the resin, is less than 1 weight percent, since the amount of the organic particles is too small, the light traveling path cannot be increased effectively and the light refraction effect is poor, whereas if the amount of the organic particles is greater than 500 weight percent, the organic particles are not easy to be fixed on the surface of the substrate, and will easily fall off from the surface of the substrate.

The anti-UV coating composition of the present invention optionally comprises an additive known to those skilled in the art, which includes, for example, but is not limited to, a curing agent, a leveling agent, a defoamer, a wetting agent, or an anti-static agent. The curing agent optionally added to the anti-UV coating composition of the present invention serves to form an intermolecular chemical bonding with the resin, so as to form a crosslinking. The curing agent suitable for the present invention is known to those skilled in the art, and may be, for example, but is not limited to, polyisocyanate.

The anti-UV coating composition of the present invention can be applied to the surface of any suitable substrate, such as, optical substrates, glass, metal, alloy, computer cases, cement, wood ware, plastic, leather, or stone. In particular, the anti-UV coating composition of the present invention can be applied to optical substrates to form an anti-UV layer on the surface thereof, so as to provide a UV-absorbing effect.

The present invention further provides a film with an anti-UV coating layer, comprising an optical substrate and at least one anti-UV layer formed from the anti-UV coating composition of the present invention on at least one surface of the substrate.

Considering the functions, the optical substrates may be classified into, but are not limited to, reflective substrates and transparent substrates, of which the reflective substrates are preferred. Preferably, the optical substrates are plastic substrates, which are not particularly limited and can be those known to persons of ordinary skill in the art, which include, but are not limited to, polyester resins, such as polyethylene terephthalate (PET) or polyethylene naphthalate (PEN); polyacrylate resins, such as polymethyl methacrylate (PMMA); polyimide resins; polyolefin resins, such as polyethylene (PE) or polypropylene (PP); polycycloolefin resins; polycarbonate resins; polyurethane resins; triacetate cellulose (TAC); or mixtures thereof. The preferred substrates are those formed from polyethylene terephthalate, polymethyl methacrylate, polycycloolefin resin, or triacetate cellulose, or a mixture thereof. More preferably, the substrate is polyethylene terephthalate. The thickness of the substrate typically depends on the requirement of the resulted optical product, and is preferably in a range of from about 16 µm to about 1000 µm.

The substrate of the present invention can be a reflective substrate. The reflective substrate of the present invention can be a monolayer or multilayer structure, wherein one or more layers may optionally be a foamed plastic, a plastic containing particles, or a combination thereof. The reflection effect of the optical film of the present invention can be achieved by the foamed plastic or the plastic containing the particles. The particles include organic particles and inorganic particles. The species of the inorganic particles can be those well known to persons having ordinary skill in the art, such as zinc oxide, silica, titanium dioxide, alumina, calcium sulfate, barium sulfate, or calcium carbonate particles, or mixtures thereof. The species of the organic particles can be those well known to persons having ordinary skill in the art, such as, (meth)acrylic resin, urethane resin, or silicone resin particles, or mixtures thereof. The diameter of the particles or bubbles is in a range of from 0.01 µm to 10 µm preferably from 0.1 µm to 5 µm.

The reflective substrate of the present invention can be composed of one or more commercially available films. The commercially available films applicable to the present invention include, for example, but are not limited to, the films under the trade names uxz1-188^{®}, uxz1-225^{®}, ux-150^{®}, ux-188^{®} and ux-225^{®}, produced by Teijin-Dupont Company; the film under the trade name SY-64^{®}, produced by SKC Corporation; the films under the trade names E60L^{®}, QG08^{®}, QG21^{®}, QX08^{®} and E6SL^{®}, produced by Toray Company; the films under the trade names WS220E^{®} and WS 180E^{®}, produced by Mitsui Company; the film under the trade name RF230^{®}, produced by Tsujiden Company; and the films under the trade names FEB200^{®}, FEB250^{®}, and FEB300^{®}, produced by Yupo Company.

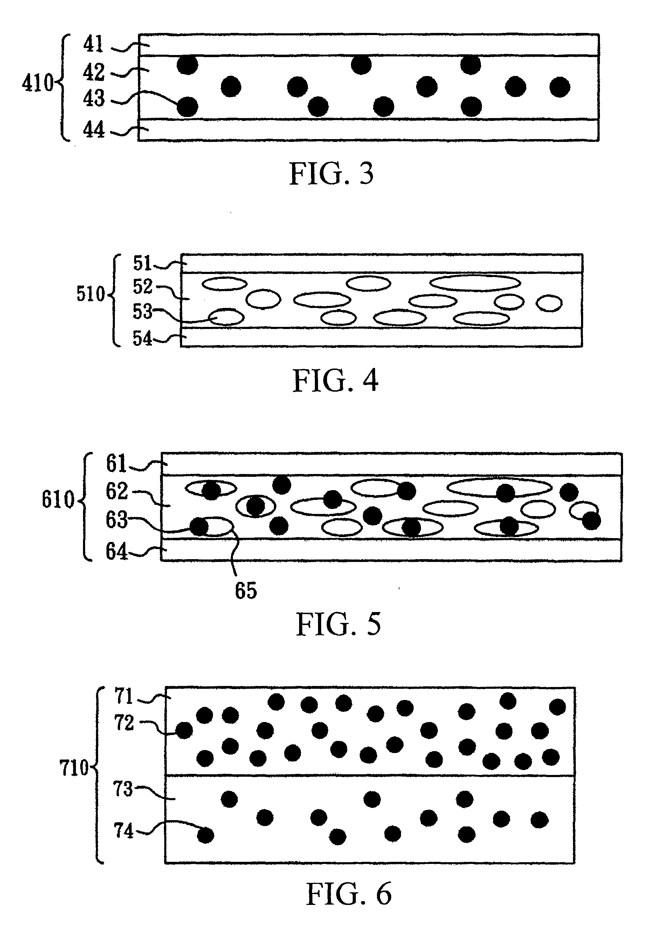

FIGs. 3 to 6 show specific embodiments of the reflective substrate suitable for the present invention.

FIG 3 shows a preferred embodiment of the reflective substrate of the present invention, in which a substrate (310) is a tri-layered plastic substrate composed of layers (41), (42), and (44), and the intermediate layer (42) contains inorganic particles (43) therein. The species of the substrate can be as those defined herein before. For example, the tri-layered plastic substrate is a PET resin, such as the commercially available film under the trade name ux-225^{®}, the intermediate layer of which contains barium sulfate as inorganic particles.

FIG. 4 shows another embodiment of the reflective substrate suitable for the present invention, in which a substrate (510) is a tri-layered plastic substrate composed of layers (51), (52) and (54), and the intermediate layer (52) is a foamed plastic having bubbles (53). The species of the substrate can be as those defined herein before. For example, the tri-layered plastic substrate is a PET resin, such as the commercially available film under the trade name E6SL^{®}, the intermediate layer of which contains bubbles.

FIG. 5 shows yet another embodiment of the reflective substrate suitable for the present invention, in which a substrate (610) is a tri-layered plastic substrate composed of layers (61), (62) and (64), and the intermediate layer (62) contains both inorganic particles (63) and bubbles (65). The species of the substrate can be as those defined herein before. For example, the tri-layered plastic substrate is a PP resin, such as the commercially available film under the trade name FEB300^{®}, the intermediate layer of which contains, in addition to bubbles, titanium dioxide and calcium carbonate as inorganic particles.

FIG. 6 shows yet one another embodiment of the reflective substrate suitable for the present invention, in which a substrate (710) is a bi-layered plastic substrate composed of layers (71) and (73), of which the upper layer (71) contains more inorganic particles (72) and the lower layer (73) contains less inorganic particles (74). The species of the substrate can be as those defined herein before. For example, the bi-layered plastic substrate can be a PET resin, a PEN resin, or a combination thereof. Specific example includes, such as the commercially available film under the trade name uxzl-225^{®}, which is composed of PET resin and PEN resin and contains barium sulfate as inorganic particles.

The substrate of the present invention can also be a transparent substrate. The transparent substrate can be a monolayer or multilayer structure. The commercially available transparent substrates that can be used in the present invention include, but are not limited to, U34^{®} (trade name), produced by Toray Company; T680E^{®} or T900E^{®} (trade name), produced by Mitsubishi Company; A4300^{®} (trade name), produced by Toyobo Company; KDDW^{®} or KD84W^{®} (trade name), produced by Teijin-Dupont (TDFJ) Company, Japan.

The thickness of the anti-UV layer of the film of the present invention is appropriately in a range of from 0.1 µm to 20 µm, and preferably from 1 µm to 15 µm.

The film having an anti-UV layer of the present invention can be fabricated in any way known to those skilled in the art, for example, by using a roll-to-roll continuous process including the following steps:
(I) mixing the components such as a resin, inorganic particulates, organic particles, and a solvent and optionally a conventional additive to form an anti-UV coating composition;
(II) Coating the anti-UV coating composition onto the surface of a substrate to form a coating layer; and
(III) Heating the coated substrate for one to several minutes to evaporate off the solvent and to perform a thermosetting polymerization.

If desired, the steps can be repeated to obtain an anti-UV layer having a plurality of layers. Optionally, the anti-UV layer can optionally be coated with one or more anti-UV layers on another surface.

In the above Step (II), the substrate may optionally be treated with a corona surface treatment or a plasma surface treatment to enhance the adhesion of the anti-UV coating composition. The method suitable for coating the anti-UV coating composition on the substrate is well known to those skilled in the art, which can be, for example, slit die coating, micro gravure coating, or roller coating, or a combination of two or more of the above methods.

The light emitted from the light source in the backlight module of displays, such as cold cathode fluorescent lamp (CCFL), external electrode fluorescent lamp (EEFL), hot cathode fluorescent lamp (HCFL), plane xenon light source, or UV light-emitting diode, contains UV light at 300 nm to 399 nm and visible light at 400 nm to 780 nm, in which the UV light at 313 nm is most harmful to the film material.

When the optical substrate is a reflective substrate, the reflectivity of the film of the present invention is less than 10% at the wavelength of 313 nm, as measured according to ASTM 903-96 standard method. When the optical substrate is a transparent substrate, the transmittance of the film of the present invention is less than 10% at the wavelength of 313 nm, as measured according to ASTM 903-96 standard method. Therefore, the anti-UV layer formed from the anti-UV coating composition of the present invention can effectively absorb the UV light with the wavelength of 313 nm.

According to one embodiment, the yellowing index variation (ΔYI) of the film of the present invention is less than 2, as measured according to ASTM G154 weathering test method and ASTM E313 detection method, thus effectively reducing the yellowing of the film itself.

In addition, according to one embodiment, when the optical substrate is a reflective substrate, the film of the present invention can provide a reflectivity greater than 97% in the visible light wavelength range of from 400 nm to 780 nm, so as to effectively enhance the brightness of the backlight module.

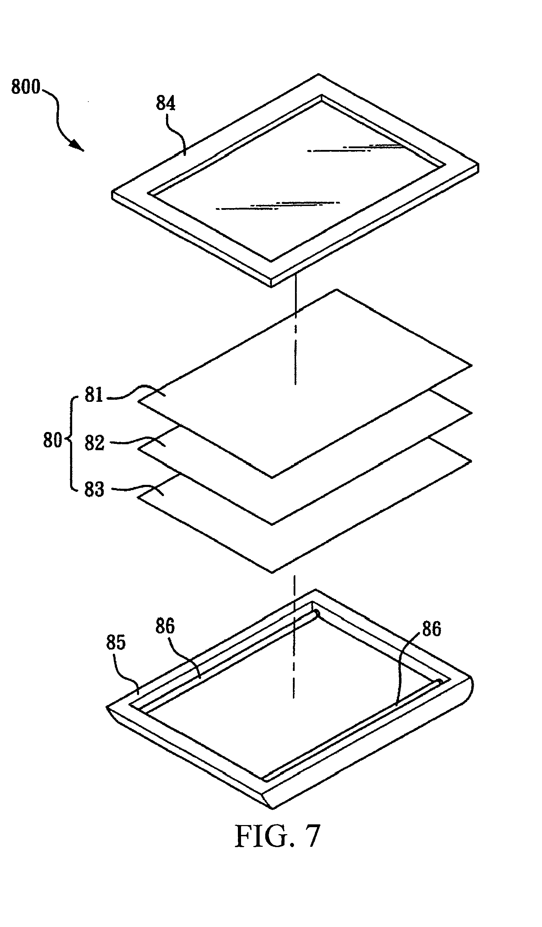

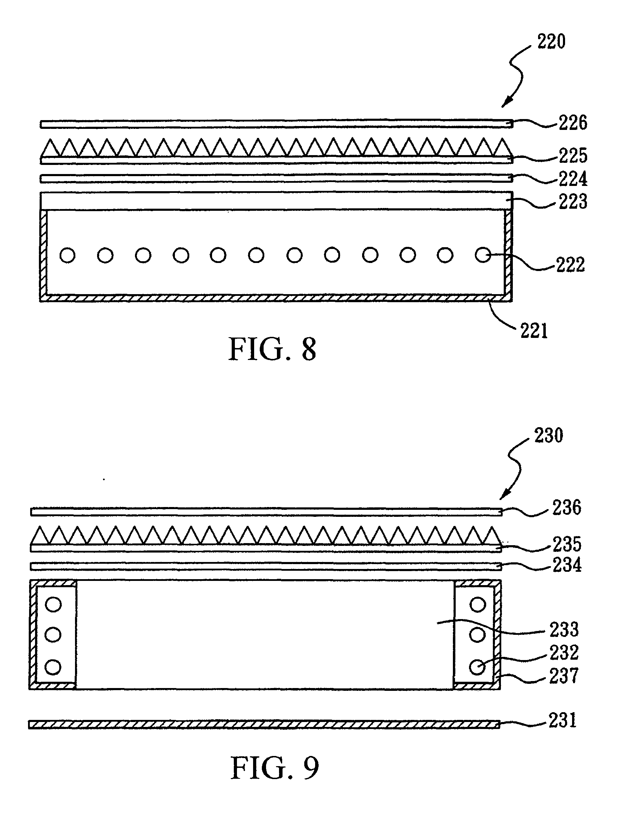

The film having the anti-UV layer of the present invention can be applied to the glass used in common buildings (e.g., the outer walls of buildings) or common vehicles (e.g., automobiles), to provide good anti-UV effect. The film having the anti-UV layer of the present invention can also be applied to light source devices, for example, advertising light boxes or flat panel displays, particularly in the backlight modules of LCDs as a reflective film, a shade reflective film, a diffusion film, a diffusion plate, or a brightness enhancement film, to provide an improved efficacy. A light source device of the advertising light box is as shown in FIG 7, in which the light source device (800) includes an outer frame (84), an inner frame (85), and a film set (80), wherein a lamp (86) is located in the interior of the inner frame (85), and the film set (80) includes a diffusing film (81), a light guide plate (82), and a reflective film (83). As mentioned hereinabove, the backlight modules include side-type and direct-type backlight modules. As shown in FIG. 8, the direct-type backlight module (220) includes a reflective film (221), a lamp (222), a diffusion plate (223), a diffusion film (224), a brightness enhancement film (225), and an upper diffusion film (226). As shown in FIG. 9, the side-type backlight module (230) includes a reflective film (231), a lamp (232), a light guide plate (233), a diffusion film (234), a brightness enhancement film (235), an upper diffusion film (236), and a shade reflective film (237).

The film of the present invention can enhance the brightness, has good weathering resistance, can absorb UV light, and can effectively eliminate the yellowing of the substrate and chromatic aberration of LCDs, so as to achieve the purpose of improving the performance of LCDs.

The following examples are used to further illustrate the present invention, but not intended to limit the scope of the present invention. Any modifications or alterations that can easily be accomplished by persons skilled in the art fall within the scope of the disclosure of the specification and the appended claims.

### Examples:

### Preparation of Anti-UV Coating Composition

### Anti-UV Coating Composition A

92 g of methacrylic resin (refractive index: 1.49) [Eterac 7363, Eternal Company] (solids content: about 50%) was added into a solvent of methyl ethyl ketone/toluene (each of 27.5 g). Under high speed stirring (at 500 rpm), 2 g of 35 nm titanium dioxide (refractive index: 2.72) and 37 g of 2 µm silicone resin particles (refractive index: 1.42) (Tospearl 120E, GE-Toshiba Company), and 9.2 g of a curing agent [Desmodur 3390, Bayer Company] (solids content: about 75%) were added sequentially, to provide 250 g of a coating composition (solids content: about 40%).

### Anti-UV Coating Composition B

64.0 g of methacrylic resin (refractive index: 1.49) [Eterac 7363, Eternal Corporation] (solids content: about 50%) was added into a solvent of methyl ethyl ketone/toluene (each of 36.3 g). Under high speed stirring (at 500 rpm), 1.4 g of 35 nm titanium dioxide (refractive index: 2.72) and 69 g of 2 µm silicone resin particles (refractive index: 1.42) (Tospearl 120E, GE-Toshiba Company), and 6 g of a curing agent [Desmodur 3390, Bayer Company] (solids content: about 75%) were added sequentially, to provide 250.0 g of a coating composition (solids content: about 43%).

### Anti-UV Coating Composition C

158.8 g of methacrylic resin (refractive index: 1.49) [Eterac 7363, Eternal Corporation] (solids content: about 50%) was added into a solvent of methyl ethyl ketone/toluene (each of 72.7 g). Under high speed stirring (at 500 rpm), 3.6 g of 35 nm titanium dioxide (refractive index: 2.72) and 14.9 g of a curing agent [Desmodur 3390, Bayer Company] (solids content: about 75%) were added sequentially, to provide 250.0 g of a coating composition (solids content: about 43%).

### Anti-UV Coating Composition D

64.0 g of methacrylic resin (refractive index: 1.49) [Eterac 7363, Eternal Corporation] (solids content: about 50%) was added into a solvent of methyl ethyl ketone/toluene (each of 54.8 g). Under high speed stirring (at 500 rpm), 1.4 g of 35 nm zinc oxide (refractive index: 2.37) and 69 g of 2 µm silicone resin particles (Tospearl 120E, GE-Toshiba Company), and 6 g of a curing agent [Desmodur 3390, Bayer Company] (solids content: about 75%) were added sequentially, to provide 250.0 g of a coating composition (solids content: about 43%).

In the above anti-UV coating compositions A, B and C, the inorganic particles used are all titanium dioxide, and the difference between the anti-UV coating compositions A and B resides in the amount of the silicone resin particles, and the anti-UV coating composition C is free of the silicone resin particles. In the anti-UV coating composition D, the inorganic particles are zinc oxide. In the following examples, the above coating compositions were utilized to form dried films with the same thickness by a same coating method at the same inorganic particles/resin ratio for evaluating the effects of the relative amount of the silicone resin particles and the species of the inorganic particles on the anti-UV properties of the resultant films.

### Preparation of Films of the Present Invention

### Example 1

The anti-UV coating composition A was coated onto a reflective film substrate, ux-150^{®} (film thickness: 150 µm, Teijin-Dupont Company) with a RDS Bar Coater #16, and dried at 100°C for 1 minute. After being dried, a 10 µm coating was obtained, and the total thickness of the resultant film was about 160 µm. After standing for 7 days for curing, the film was tested for the optical properties and weathering properties.

### Example 2

The anti-UV coating composition A was coated onto a reflective film substrate, ux-188^{®} (film thickness: 188 µm, Teijin-Dupont Company) with a RDS Bar Coater # 16, and dried at 100°C for 1 minute. After being dried, a 10 µm coating was obtained, and the total thickness of the resultant film was about 198 µm. After standing for 7 days for curing, the film was tested for the optical properties and weathering properties.

### Example 3

The anti-UV coating composition A was coated onto a reflective film substrate, ux-225^{®} (film thickness: 225 µm, Teijin-Dupont Company) with a RDS Bar Coater # 16, and dried at 100°C for 1 minute. After being dried, a 10 µm coating was obtained, and the total thickness of the resultant film was about 235 µm. After standing for 7 days for curing, the film was tested for the optical properties and weathering properties.

### Example 4

The anti-UV coating composition B was coated onto a reflective film substrate, ux-150^{®} (film thickness: 150 µm, Teijin-Dupont Company) with a RDS Bar Coater # 16, and dried at 100°C for 1 minute. After being dried, a 10 µm coating was obtained, and the total thickness of the resultant film was about 160 µm. After standing for 7 days for curing, the film was tested for the optical properties and weathering properties.

### Example 5

The anti-UV coating composition B was coated onto a reflective film substrate, ux-188^{®} (film thickness: 188µm, Teijin-Dupont Company) with a RDS Bar Coater # 16, and dried at 100°C for 1 minute. After being dried, a 10 µm coating was obtained, and the total thickness of the resultant film was about 198 µm. After standing for 7 days for curing, the film was tested for the optical properties and weathering properties.

### Example 6

The anti-UV coating composition B was coated onto a reflective film substrate, ux-225^{®} (film thickness: 225 µm, Teijin-Dupont Company) with a RDS Bar Coater # 16, and dried at 100°C for 1 minute. After being dried, a 10 µm coating was obtained, and the total thickness of the resultant film was about 235 µm. After standing for 7 days for curing, the film was tested for the optical properties and weathering properties.

### Example 7

The anti-UV coating composition C was coated onto a reflective film substrate, ux-188^{®} (film thickness: 188 µm, Teijin-Dupont Company) with a RDS Bar Coater # 16, and dried at 100°C for 1 minute. After being dried, a 10 µm coating was obtained, and the total thickness of the resultant film was about 198 µm. After standing for 7 days for curing, the film was tested for the optical properties and weathering properties.

### Example 8

The anti-UV coating composition D was coated onto a reflective film substrate, ux-188^{®} (film thickness: 188 µm, Teijin-Dupont Company) with a RDS Bar Coater # 16, and dried at 100°C for 1 minute. After being dried, a 10 µm coating was obtained, and the total thickness of the resultant film was about 198 µm. After standing for 7 days for curing, the film was tested for the optical properties and weathering properties.

### Commercially Available Reflective Films

### Comparative Example 1

The commercially available reflective film ux-150® having a thickness of 150 µm (Teijin-Dupont Company) was tested for the optical properties and weathering properties.

### Comparative Example 2

The commercially available reflective film ux-188^{®} having a thickness of 188 µm (Teijin-Dupont Company) was tested for the optical properties and weathering properties.

### Comparative Example 3

The commercially available reflective film ux-225^{®} having a thickness of 225 (Teijin-Dupont Company) was tested for the optical properties and weathering properties.

### Comparative Example 4

The commercially available reflective film uxzl-225^{®} having a thickness of 225 (Teijin-Dupont Company) was tested for the optical properties and weathering properties.

### Comparative Example 5

The commercially available reflective film E6SL^{®} having a thickness of 250 (Toray Company) was tested for the optical properties and weathering properties.

### Comparative Example 6

The commercially available reflective film E6SV^{®} having a thickness of 250 (Toray Company) was tested for the optical properties and weathering properties.

### Test Methods

**Film Thickness Test:** The film thickness of the sample to be tested was measured with a coating thickness gauge (PIM-100, TESA Corporation) under 1 N pressing contact.

**Reflectivity Test:** The reflectivity of the samples was measured with an ultraviolet/visible spectrophotometer (UV/Vis spectrophotometer) (Lamda 650, Perkin Elmer Company) at a wavelength range from 200 nm to 800 nm, according to an integrating sphere ASTM 903-96 method. The results are shown in Table 1.

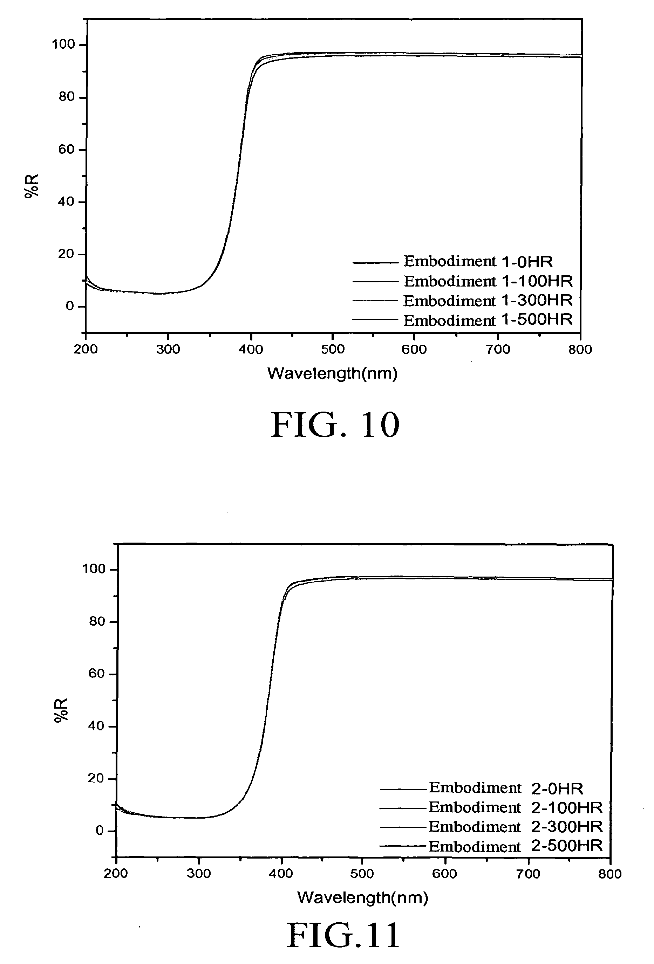

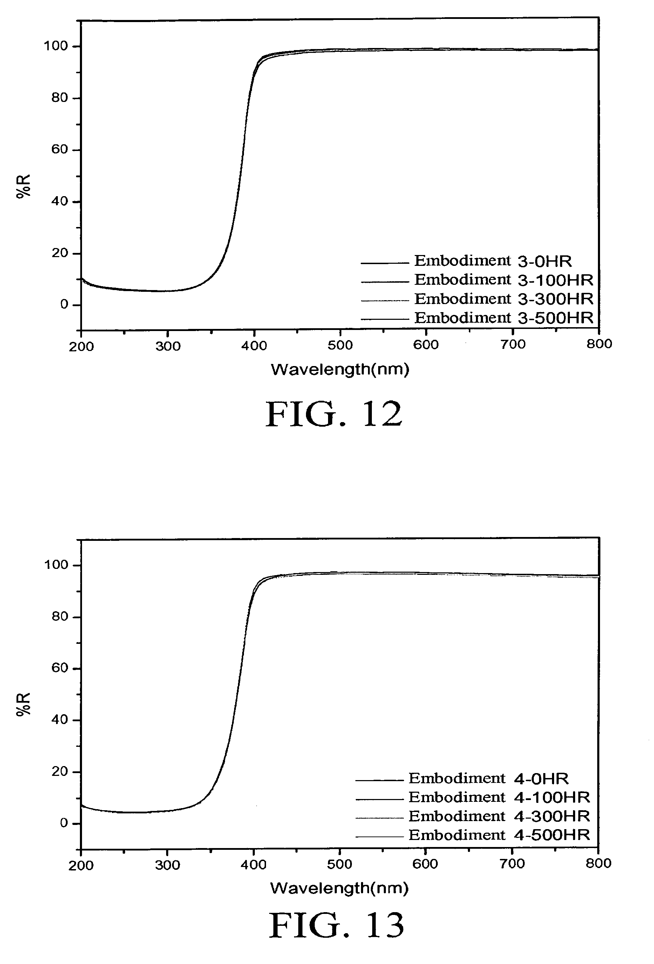

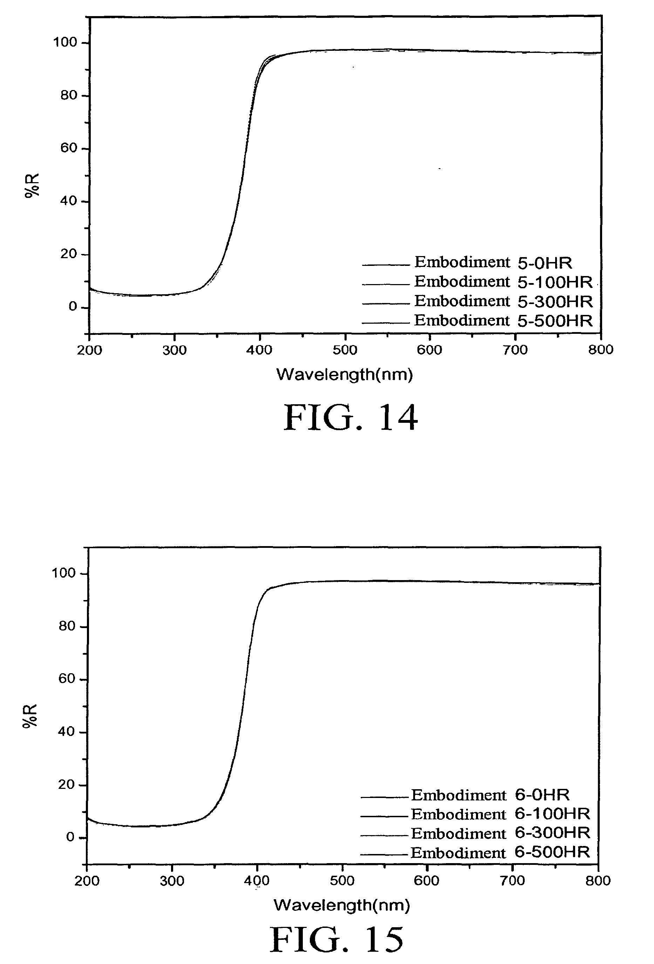

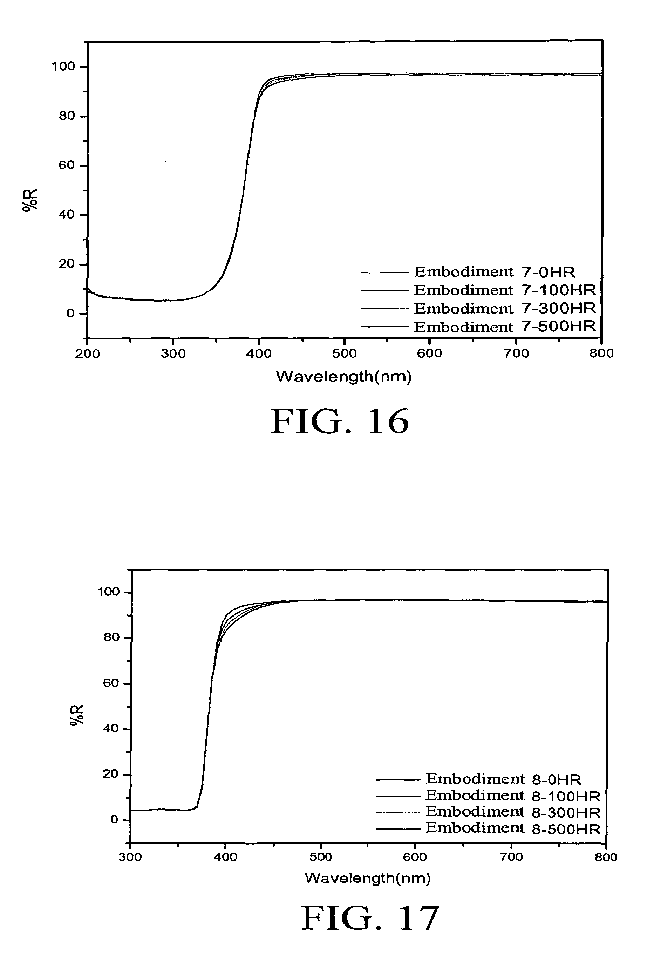

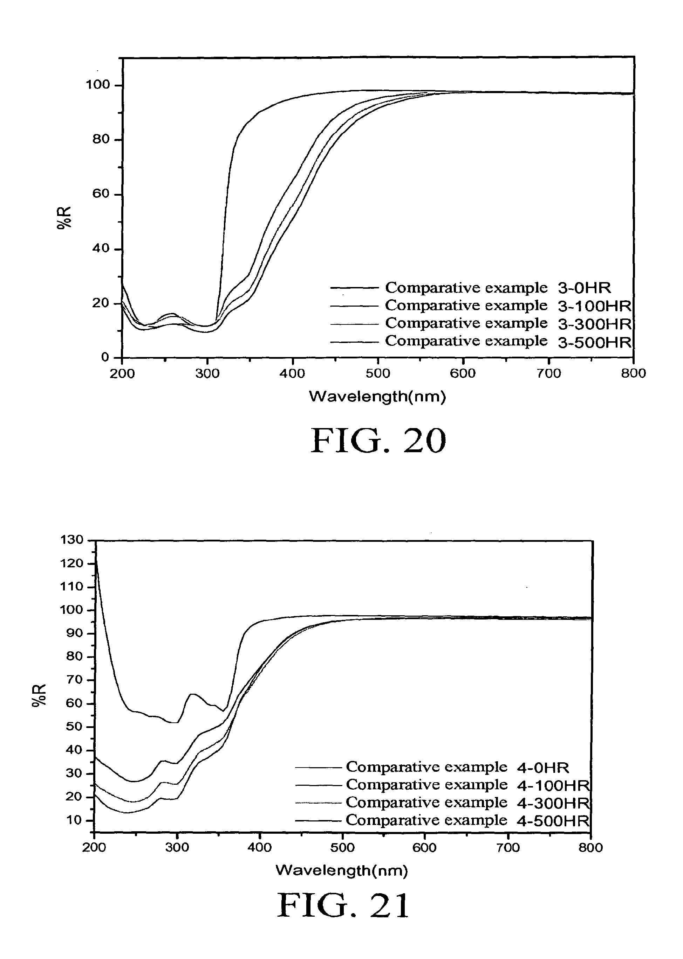

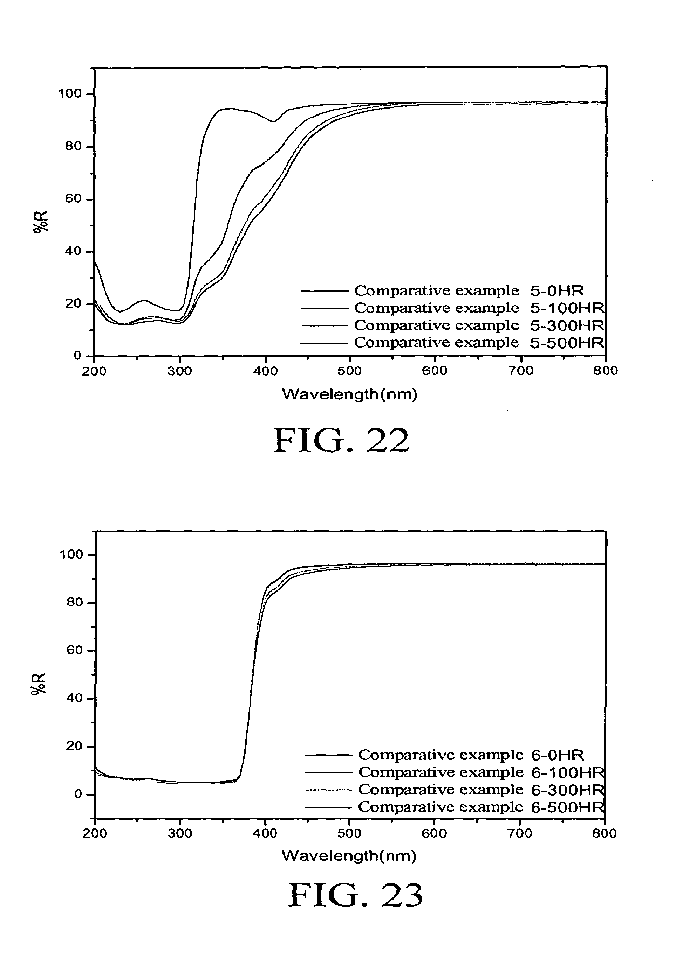

The samples were tested at 60°C, with a QUV weathering tester (Q-Panel Company) with the power of a UVB 313 nm lamp set at 0.8 W/m²/nm, according to ASTM G154 method. The films were taken out at each time point (hour 0, 100, 300, and 500), and test for the reflectivities according to the above method. The results are shown in Table 3 below, and FIGs. 10 to 23 in which R% represents reflectivity.

**Gloss Test:** After a light was projected on the surface of the samples at an incidence angle of 60°, the surface gloss of the samples were measured at a reflection angle of 60°, according to ASTM D523 method with a gloss meterVG2000 (Nippon Denshoku Company). The results are shown in Table 1 below.

**Chromaticity Test:** The L, a, b, YI values of the samples were measured, with a colorimeter Color Quest XE (Hunter Lab Company), according to a standard established in CIE 1976 and ASTM E313 method. The results are shown in Table 1 below.

**Anti-UV-Yellowing Test:** At 60°C, the samples were irradiated with a UVB 313 nm lamp with the power set at 0.8 W/m²/nm for 100, 300, and 500 hours, according to ASTM G154 method, by using a QUV weathering tester (Q-Panel Company); afterward, the samples were taken out, and the Yellowing Index (YI) values were measured according to ASTM E313 method and the yellowing index variations (ΔYI) were calculated. The results are shown in Table 2 below.

### Test Results

The optical properties of each film of Examples 1-8 and Comparative Examples 1-6 were measured by the above reflectivity, gloss, and chromaticity test, and recorded in Table 1.

**Table 1: Optical Properties of Each Film**

| Item | Gloss (60°) | Reflectivity (313 nm, %) | Reflectivity (550 nm, %) | L | a | b | YI |
|---|---|---|---|---|---|---|---|
| Example 1 | 36.2 | 5.8 | 97.74 | 98.17 | -0.15 | 0.13 | 0.06 |
| Example 2 | 33.0 | 5.5 | 98.20 | 98.36 | -0.20 | 0.33 | 0.41 |
| Example 3 | 34.9 | 5.7 | 98.45 | 98.83 | -0.17 | 0.37 | 0.50 |
| Example 4 | 2.6 | 5.5 | 97.35 | 98.04 | -0.17 | 0.27 | 0.32 |
| Example 5 | 2.6 | 5.6 | 97.90 | 98.29 | -0.20 | 0.41 | 0.55 |
| Example 6 | 2.6 | 5.5 | 98.19 | 98.37 | -0.22 | 0.58 | 0.85 |
| Example 7 | 96 | 5.9 | 97.25 | 98.26 | -0.16 | 0.24 | 0.26 |
| Example 8 | 2.6 | 4.4 | 97.60 | 98.32 | -0.23 | 0.32 | 0.37 |
| Comparative Example 1 | 45.0 | 29.2 | 96.51 | 98.04 | -0.05 | -0.19 | -0.47 |
| Comparative Example 2 | 45.3 | 28.6 | 97.13 | 98.12 | -0.04 | 0.03 | -0.05 |
| Comparative Example 3 | 44.7 | 25.8 | 97.62 | 98.39 | -0.08 | 0.08 | 0.02 |
| Comparative Example 4 | 20.0 | 64.0 | 97.65 | 98.26 | 0.32 | -0.63 | -1.01 |
| Comparative Example 5 | 29.0 | 46.5 | 96.74 | 99.39 | 2.14 | -11.50 | -19.94 |
| Comparative Example 6 | 26.0 | 5.9 | 96.73 | 98.59, | 0.35 | -4.16 | -7.63 |

The following results can be seen from Table 1:
1. Effect on gloss: In Examples 1, 2, and 3, the anti-UV coating composition A is coated onto a substrate. As compared with the anti-UV coating composition B, the amount of the silicone resin particles based on the amount of the resin in the anti-UV coating composition A is lower (about 80 weight percent), and the surface of the coating layer is smoother. However, the incidence light enters the coating and is refracted and reflected by a portion of the particles, and thus the gloss values 36.2, 33.0, and 34.9, respectively are obtained. In Examples 4, 5, and 6, and 8, the anti-UV coating compositions B and D are coated onto the substrates, respectively. In the anti-UV coating compositions B and D, the amount of the silicone resin particles, based on the weight of the resin, is about 200 weight percent, and the surfaces of the coating layers are rough, so that when the incidence light enters the coating, the light is refracted by the organic particles many times and a reflected light with Lambertian diffusion is observed. The resultant gloss values are all 2.6. In Example 7, the coating used is free of any silicone resin particles and the surface of the coating layer is quite level and smooth. The gloss value is high; the incidence light is directly reflected, and the measured gloss value is 96.0.
2. Effect on reflectivity: The reflectivity values at the visible wavelength of 550 nm in Examples 1 to 3 and 4 to 6 are respectively 97.74%, 98.20%, and 98.45% and 97.35%, 97.90%, and 98.19%, which indicates that an increase in the total film thickness will enhance the reflectivity at the visible wavelength of 550 nm. As compared with Comparative Examples 1, 2, and 3, the reflectivities at the visible wavelength of 550 nm in Examples 1, 2, and 3 are increased by about 1%, which indicates that the anti-UV coating composition A will enhance the reflectivity of the original reflective substrate. The results associated with Examples 4, 5, and 6 also indicate that the anti-UV coating composition B achieves an effect of increasing the reflectivity. The reflectivities at the UV wavelength of 313 nm in Examples 1-7 are less than 10%. As compared with those in Comparative Examples 1-5, it is apparent that the anti-UV coating compositions A, B and C provide an UV-absorbing effect. The reflectivity at the UV wavelength 313 nm in Example 8 is also less than 10%, which indicates that the anti-UV coating composition D containing nano zinc oxide as inorganic particulates also provides a UV-absorbing effect.
3. Effect on chromaticity: The L, a, b, and YI data in Examples 1-8 are not significantly different from those in Comparative Examples 1, 2, and 3, which indicates that the chromaticity performance of the original reflective substrate will not be affected by coating any of the anti-UV coating compositions A, B, C, and D.

The yellowing index variations at each time point of each of the films of Examples 1-8 and Comparative Examples 1-6 were measured by the anti-UV yellowing test described above. The results are recorded in Table 2. In addition, the reflectivities of the films at each time point are shown in FIGs. 10 to 23.

**Table 2: Yellowing Index Variations with QUV (UVB-313 nm) Irradiation**

| Item | Irradiated for 100 hours | Irradiated for 300 hours | Irradiated for 500 hours |
|---|---|---|---|
| | ΔYI | ΔYI | ΔYI |
| Example 1 | 0.63 | 0.66 | 0.80 |
| Example 2 | 0.50 | 0.52 | 0.69 |
| Example 3 | 0.52 | 0.58 | 0.65 |
| Example 4 | 0.46 | 0.50 | 0.56 |
| Example 5 | 0.25 | 0.28 | 0.30 |
| Example 6 | 0.38 | 0.44 | 0.47 |
| Example 7 | 0.86 | 1.30 | 1.96 |
| Example 8 | 0.82 | 1.22 | 1.86 |
| Comparative Example 1 | 6.70 | 11.1 | 13.98 |
| Comparative Example 2 | 5.59 | 11.17 | 14.02 |
| Comparative Example 3 | 7.34 | 12.60 | 15.79 |
| Comparative Example 4 | 5.67 | 6.53 | 7.53 |
| Comparative Example 5 | 19.87 | 25.97 | 29.65 |
| Comparative Example 6 | 0.13 | 1.74 | 2.48 |

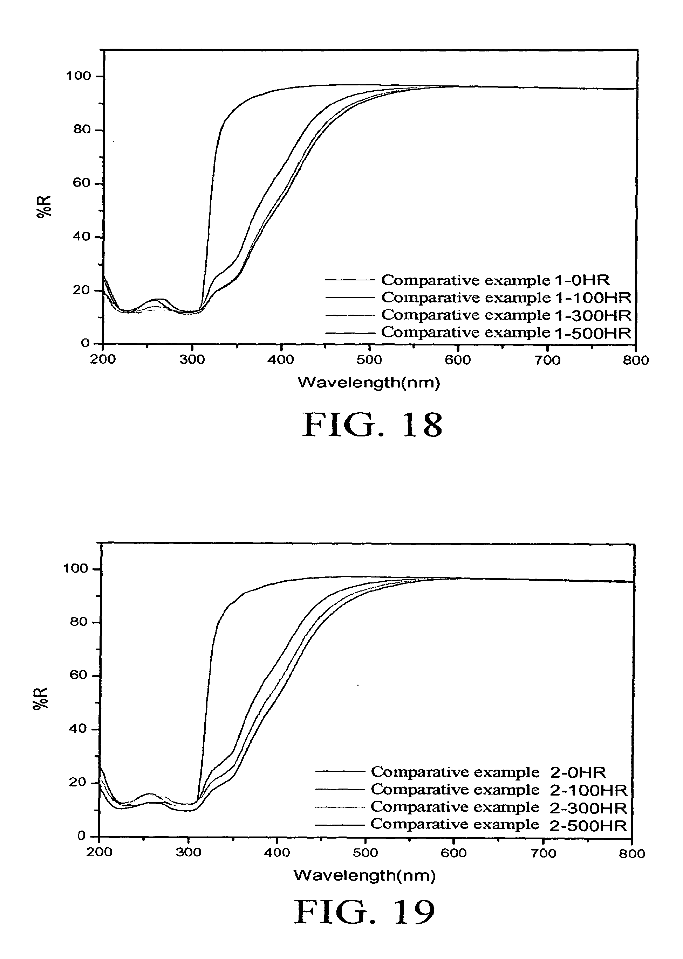

The following results can be seen from Table 2 and FIGs. 8 to 21:
1. In Examples 1-8 and Comparative Examples 1-6, each film has been irradiated with QUV for 100, 300, 500 hours, and the yellowing index is increased gradually with the irradiation time, and after the films coated with the anti-UV coating compositions A, B, and C of Examples 2, 5, and 7 have been irradiated for 500 hours, the yellowing index variations (ΔYI) are 0.69, 0.30, and 1.96 respectively, with that of Example 5 being the least, which shows that, with the same dried film thickness and reflective substrate, the increase in the amount of the silicone resin particles added will allow the UV light entering the coating to be refracted many times between the particles and the resin, so that the path of the UV light traveling to the substrate is increased, and the number of times that the light contacts the inorganic particles is also increased, thereby improving the anti-UV properties of the coating composition.
2. FIGs. 10 to 16 are the reflection spectrograms of the films of Examples 1-7 after irradiation with QUV, measured at hour 0,100, 300, and 500. It can be seen from FIGs. 10 to 16 that, no significant change in the reflectivity of these films in the visible wavelength range of 400-800 nm is observed, which shows that titanium dioxide inorganic particulates are capable of absorbing UV light. The yellowing index variation of the film coated with the anti-UV coating composition D of Example 8 is 1.86, after having been irradiated with QUV for 500 hours, which shows that the coating composition containing zinc oxide is also capable of absorbing UV light.
3. It can be seen from Table 2 that, after being irradiated with QUV for 500 hours, the yellowing index variations of the films of Comparative Examples 1-5 are greater than 7.0, and that of Comparative Example 6 is about 2.48, which is still higher than those of Examples 1-8. It can be further seen from the reflection spectrograms of FIGs. 18 to 23 that, for the films of Comparative Examples 1-5 after being irradiated for 0, 100, 300, and 500 hours with QUV, the reflectivities in the visible wavelength range of 400- 780 nm have changed and decreased obviously, especially in the blue light region (400-550 nm), and the variation is significant, resulting in the increase of the yellowing indexes of the films.

The reflectivity of each of the films of Examples 1-8 and Comparative Examples 1-6 is measured at hour 0 and 500 with a QUV weathering tester (Q-Panel Company) at 60°C, with the power of a UVB 313 nm lamp set at 0.8 W/m²/nm at 60°C, according to ASTM G154 method, and recorded in Table 3.

**Table 3: Comparison of reflectivity variations after being irradiated for 500 hours with QUV (UVB-313 nm)**

| Item | Reflectivity (450 nm, %) | | Reflectivity (550 nm, %) | | Reflectivity (650 nm, %) | |
|---|---|---|---|---|---|---|
| | 0 hour | 500 hours | 0 hour | 500 hour | 0 hour | 500 hours |
| Example 1 | 97.0 | 96.1 | 97.2 | 96.1 | 96.8 | 95.8 |
| Example 2 | 97.0 | 96.0 | 97.5 | 96.9 | 97.3 | 96.6 |
| Example 3 | 97.9 | 96.8 | 98.4 | 97.8 | 98.1 | 97.6 |
| Example 4 | 96.4 | 96.4 | 96.7 | 96.5 | 96.2 | 96.2 |
| Example 5 | 96.5 | 96.5 | 97.0 | 96.6 | 96.6 | 96.6 |
| Example 6 | 96.5 | 96.5 | 98.2 | 97.6 | 96.9 | 96.9 |
| Example 7 | 96.9 | 95.3 | 97.3 | 96.0 | 97.0 | 95.8 |
| Example 8 | 97.1 | 96.5 | 97.6 | 96.8 | 97.4 | 96.7 |
| Comparative Example 1 | 96.6 | 80.6 | 96.5 | 94.9 | 96.0 | 96.0 |
| Comparative Example 2 | 97.0 | 80.3 | 97.1 | 95.3 | 96.6 | 96.5 |
| Comparative Example 3 | 97.3 | 79.3 | 97.6 | 95.5 | 97.2 | 97.0 |
| Comparative Example 4 | 97.4 | 91.7 | 97.7 | 96.7 | 97.5 | 96.8 |
| Comparative Example 5 | 95.6 | 82.8 | 96.7 | 95.0 | 96.9 | 96.1 |
| Comparative Example 6 | 95.7 | 93.0 | 96.7 | 95.9 | 96.9 | 96.4 |

The following results can be seen from Table 3:
1. For the films of Examples 1-6 and 8, after being irradiated for 500 hours with a QUV (UVB-313 nm), the reflectivity variations at the visible wavelength of 450 nm (blue light), 550 nm (green light) and 650 nm (red light) are less than 2.0%, which indicates that the inorganic particulates of titanium dioxide or zinc oxide can effectively absorb UV light and protect the original reflective substrate. With the increase in the amount of the organic silicone resin particles, the path of the UV light traveling to the substrate after entering the coating is increased and the number of times that the light contacts the inorganic particulates is also increased, thereby reducing the damage caused by the UV light on the substrate, and the reflectivity can substantially remain as that at 0 hour. Although the film of Example 7 contains inorganic particulates, the resin component is free of silicone resin particles, and the incidence UV light will be directly reflected, and number of the times that the light contacts the inorganic particulates is decreased, so that the UV light cannot be effectively absorbed, thus impacting the film properties, and all the reflectivity variations at the visible wavelengths of 450 nm, 550 nm, and 650 nm are greater than those of Examples 1-6.
2. For the films of Comparative Examples 1-5 after being irradiated for 500 hours with QUV (UVB-313 nm), the reflectivity variations at the visible wavelength of 450 nm are almost greater than 10%, which indicates that the reflectivity in the blue light region is significantly decreased. Referring to Table 2, it can be seen that, the yellowing indexes of these films are also significantly increased. In addition, for the film of Comparative Example 6, the reflectivity variation at the visible wavelength of 450 nm is 2.7%, and for the films of Examples 1-8, the reflectivity variations are less than 2.0%, which shows that the films of Examples 1-8 are superior to the film of Comparative Example 6.

From the above results, it is known that the anti-UV coatings of the present invention possess excellent properties, so that the reflective substrates coated with the anti-UV coatings of the present invention exhibit superior properties in terms of the chromaticity performance, the yellowing index variation obtained from the test with a UV (UVB-313 nm) for 500 hours, or the reflectivity over commercially available products.

## Claims

1. An anti-UV coating composition, comprising inorganic particulates, a resin, and at least one kind of organic particles having a different refractive index from that of the resin, wherein the organic particles have a particle size in a range of from 0.1 µm to 10 µm.

2. The anti-UV coating composition as claimed in Claim 1, wherein the organic particles have a particle size in a range of from 1 µm to 5 µm.

3. The anti-UV coating composition as claimed in Claim 1, wherein the organic particles have a refractive index of from 1.40 to 1.60.

4. The anti-UV coating composition as claimed in Claim 1, wherein the organic particles are present in a range of from 1 to 500 weight percent based on the weight of the resin.

5. The anti-UV coating composition as claimed in Claim 4, wherein the organic particles are present in a range of from 10 to 300 weight percent based on the weight of the resin.

6. The anti-UV coating composition as claimed in Claim 1, wherein the absolute value of the difference between the refractive indexes of the organic particles and the resin is at least 0.07 and at most 0.6.

7. The anti-UV coating composition as claimed in Claim 1, wherein the organic particles are selected from the group consisting of methacrylic resin and silicone resin particles, and mixtures thereof.

8. The anti-UV coating composition as claimed in Claim 7, wherein the organic particles are silicone resin particles.

9. The anti-UV coating composition as claimed in Claim 1, wherein the inorganic particulates are selected from the group consisting of the particulates of zinc oxide, silica, titanium dioxide, zirconia, alumina, barium sulfate, and calcium carbonate, and mixtures thereof.

10. The anti-UV coating composition as claimed in Claim 9, wherein the inorganic particulates are selected from the group consisting of particulates of zinc oxide and titanium dioxide and mixtures thereof.

11. The anti-UV coating composition as claimed in Claim 1, wherein the inorganic particulates have a particle size in a range of from 1 nm to 1000 nm.

12. The anti-UV coating composition as claimed in Claim 1, wherein the inorganic particulates are present in a range of from 0.1 to 100 weight percent based on the weight of the resin.

13. The anti-UV coating composition as claimed in Claim 1, wherein the resin is selected from the group consisting of acrylic resins, methacrylic resins, polyamide resins, epoxy resins, fluoro resins, polyimide resins, polyurethane resins, alkyd resins, and polyester resins, and mixtures thereof.

14. The anti-UV coating composition as claimed in Claim 13, wherein the resin is a methacrylic resin.

15. The anti-UV coating composition as claimed in Claim 13, wherein the resin is a fluoro resin.

16. A film having an anti-UV coating layer, comprising an optical substrate, wherein the substrate has at least one anti-UV layer formed from the coating composition as claimed in Claim 1 on at least one surface thereof.

17. The film as claimed in Claim 16, wherein the optical substrate is a reflective substrate or a transparent substrate.

18. The film as claimed in Claim 17, wherein the optical substrate is a reflective substrate.

19. The film as claimed in Claim 18, wherein the reflective substrate is a monolayer or multilayer structure.

20. The film as claimed in Claim 18, wherein one or more layers of the reflective substrate are a foamed plastic or a plastic containing particles or a combination thereof.

21. The film as claimed in Claim 20, wherein one or more layers of the reflective substrate contain both the foamed plastic and the plastic containing particles.

22. The film as claimed in Claim 20, wherein the particles are organic particles or inorganic particles.

23. The film as claimed in Claim 22, wherein the organic particles are selected from the group consisting of methacrylic resin particles, urethane resin particles, and silicone resin particles, and mixtures thereof.

24. The film as claimed in Claim 22, wherein the inorganic particles are selected from the group consisting of particles of zinc oxide, silica, titanium dioxide, alumina, calcium sulfate, barium sulfate, and calcium carbonate, and mixtures thereof.

25. The film as claimed in Claim 20, wherein the particles or bubbles have a diameter in a range of from 0.01 µm to 10 µm.

26. The film as claimed in Claim 16, wherein the optical substrate has a thickness in a range of from 16 µm to 1000 µm.

27. The film as claimed in Claim 16, wherein the anti-UV layer has a thickness in a range of from 0.1 to 20 µm.

28. The film as claimed in claim 27, wherein the anti-UV layer has a thickness in a range of from 1 to 15 µm.

29. The film as claimed in Claim 18, having a yellowing index variation (ΔYI) of less than 2, as measured according to ASTM G154 and ASTM E313 standard methods.

30. The film as claimed in Claim 16, for use in a display device as a reflective film.

31. The film as claimed in Claim 16, for use in the display device as a diffusion film.

32. The film as claimed in Claim 30, having a reflectivity of less than 10%, as measured at the wavelength of 313 nm according to ASTM 903-96 standard method.

33. The film as claimed in Claim 31, having a transmittance of less than 10%m as measured at the wavelength of 313 nm according to ASTM 903-96 standard method.
